(19) Europäisches Patentamt
European Patent Office
Office européen des brevets

(11) **EP 2 676 176 B1**

(12) **FASCICULE DE BREVET EUROPEEN**

(45) Date de publication et mention de la délivrance du brevet:
**13.11.2019 Bulletin 2019/46**

(21) Numéro de dépôt: **12708912.6**

(22) Date de dépôt: **13.02.2012**

(51) Int Cl.:
**G05B 23/02** *(2006.01)*    **G06F 17/00** *(2019.01)*
**B64F 5/60** *(2017.01)*

(86) Numéro de dépôt international:
**PCT/FR2012/050309**

(87) Numéro de publication internationale:
**WO 2012/110733 (23.08.2012 Gazette 2012/34)**

(54) **SURVEILLANCE D'UN MOTEUR D'AÉRONEF POUR ANTICIPER LES OPÉRATIONS DE MAINTENANCE**

ÜBERWACHUNG EINES FLUGZEUGMOTORS ZUR VORHERSAGE VON WARTUNGSOPERATIONEN

MONITORING OF AN AIRCRAFT ENGINE FOR ANTICIPATING MAINTENANCE OPERATIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.02.2011 FR 1151238**

(43) Date de publication de la demande:
**25.12.2013 Bulletin 2013/52**

(73) Titulaire: **Safran Aircraft Engines
75015 Paris (FR)**

(72) Inventeur: **LACAILLE, Jérôme, Henri, Noël
F-77550 MOISSY-CRAMAYEL Cedex (FR)**

(74) Mandataire: **Ilgart, Jean-Christophe
BREVALEX
95, rue d'Amsterdam
75378 Paris Cedex 8 (FR)**

(56) Documents cités:
**US-A1- 2005 114 090    US-A1- 2008 091 630**

## Description

### DOMAINE DE L'INVENTION

La présente invention se rapporte au domaine de surveillance d'un moteur d'aéronef. En particulier, l'invention concerne un procédé et un système de surveillance pour anticiper les opérations de maintenance d'un moteur d'aéronef.

Durant chaque vol, un aéronef procède à l'enregistrement et l'envoi d'informations sur son fonctionnement selon un système de message nommé ACARS (Aircraft Communication Addressing and Reporting System). Ces données sont récupérées par les stations au sol en temps réel pour être traitées immédiatement dans le cas d'anomalies évidentes et sinon pour être archivées avec toutes les données de la flotte. D'autres données sont aussi disponibles, elles peuvent être enregistrées durant le vol sur des calculateurs embarqués et être déchargées régulièrement pour enrichir les informations relatives aux moteurs.

Ces données sont ensuite consultées par des experts pour surveiller le bon fonctionnement du moteur. Plus particulièrement, les experts analysent la forme des courbes temporelles concernant la vitesse de rotation de l'arbre N2, le débit carburant FF (fluid flow), et la température des gaz d'échappement EGT (Exhaust Gas Temperature) issus des vols successifs pour diagnostiquer l'état d'un moteur.

Les outils utilisés impliquent une exploitation manuelle des données et une transmission de savoir entre les experts du moteur. Ceci nécessite un grand temps d'analyse et en plus, il est difficile d'analyser toutes les données dans tous les contextes sachant qu'un moteur donné ne fonctionne jamais sous exactement les mêmes conditions lors des vols opérationnels. En effet, les conditions d'acquisition de données sont systématiquement différentes : elles dépendent du pilotage, de la météo, du trajet, du vieillissement du moteur, etc. Par exemple, la forme des courbes correspondant à des données issues des aéronefs survolant la mer est différente de celle construite à partir des données issues des aéronefs survolant la terre ferme. Or, les experts sont en général des spécialistes de moteurs spécifiques sur des flottes d'aéronefs qui réalisent toujours les mêmes missions. Ainsi, il est difficile pour les experts d'exploiter toutes les données qui peuvent être pertinentes pour la surveillance des moteurs. US2008/0091630 divulgue un procédé de surveillance d'un moteur d'aéronef

L'objet de la présente invention est par conséquent la surveillance du bon fonctionnement des moteurs et de l'évolution de leurs états selon une analyse non supervisée de la structure de mesures relatives aux moteurs afin de pronostiquer et de planifier les opérations de maintenance avec une grande précision sans présenter les inconvénients précités.

### OBJET ET RÉSUMÉ DE L'INVENTION

La présente invention concerne un procédé de surveillance d'un moteur d'aéronef, comportant les étapes suivantes :

- recueillir au cours du temps des mesures sur des variables relatives à un moteur courant et son environnement comprenant à chaque acquisition un premier ensemble de mesures sur des variables endogènes décrivant le comportement du moteur et un second ensemble de mesures sur des variables exogènes décrivant le contexte d'acquisition ;
- standardiser les mesures relatives aux variables endogènes en prenant en compte les mesures relatives aux variables exogènes pour former à chaque acquisition un point d'entrée représentant un état dudit moteur courant dans un espace multidimensionnel ;
- projeter selon une technique de compression déterminée chaque point d'entrée de l'espace multidimensionnel sur un point image d'une carte, construite préalablement, pour former une suite de points images sur ladite carte reflétant la distribution des points d'entrées dans l'espace multidimensionnel, lesdits points images formant une trajectoire courante représentative d'une évolution des états dudit moteur courant ;
- comparer un morceau de la fin de ladite trajectoire courante avec des morceaux de trajectoires de moteurs d'aéronefs enregistrées précédemment dans une base de données pour chercher des trajectoires similaires ; et
- analyser l'évolution statistique de ladite fin de trajectoire courante en fonction desdites trajectoires similaires pour anticiper des opérations de maintenance sur ledit moteur courant.

Ce procédé permet de cartographier les données relatives à l'état du moteur indépendamment du contexte, de chercher des moteurs ayant eu un comportement analogue dans le passé, et d'analyser statistiquement les événements intervenus sur les moteurs retrouvés, afin de mieux planifier les opérations de maintenance et de mieux cerner les dégradations et les pannes potentielles du moteur courant. Ce procédé permet aussi de modéliser la distribution de loi des événements et d'obtenir des probabilités conditionnelles de changement d'état afin de mieux planifier la logistique de conception et de mise à disposition des pièces de remplacement.

Ladite carte est construite lors d'une phase préalable d'apprentissage selon ladite technique de compression déterminée à partir d'un jeu de données standardisées d'apprentissage.

Avantageusement, ladite technique de compression déterminée est une technique de cartographie auto adaptative de Kohonen.

Avantageusement, le procédé comporte en outre un affichage des points images sur au moins une carte bidimensionnelle.

Avantageusement, le procédé comporte un affichage de ladite trajectoire courante sur une pluralité de fonds de cartes bidimensionnelles représentant chacun une desdites variables endogènes.

Avantageusement, le procédé comporte un affichage de ladite fin de trajectoire courante et des premières trajectoires similaires classées par ordre de similarité sur une pluralité de fonds de cartes bidimensionnelles.

Avantageusement, le procédé comporte un affichage de fond de carte correspondant à une classification hiérarchique en zones homogènes de différents fonds de cartes représentatifs des variables endogènes.

Avantageusement, le procédé comporte un affichage d'un état courant d' une pluralité de moteurs sur une pluralité de fonds de cartes 2D représentant chacun une desdites variables endogènes.

Selon une particularité de la présente invention, le procédé comporte une étape d'adaptation pour transformer ladite carte au cours du temps en prenant en compte lesdits points d'entrée. Ainsi, on prend en compte les nouveaux points pour affiner davantage la carte afin de mieux pronostiquer les opérations de maintenance.

Selon un aspect de la présente invention, l'étape de standardisation comporte une étape de normalisation des variables endogènes selon un modèle de régression sur un espace de variables de contexte généré par des combinaisons analytiques des variables exogènes. Ce prétraitement qui consiste à utiliser un modèle de régression sur des variables de contexte additionnelles construites par exemple à partir de transformations polynomiales, exponentielles et logarithmiques des variables exogènes initiales permet de supprimer de manière efficace l'influence du contexte d'acquisition (c'est-à-dire les effets environnementaux et les consignes) sur les variables endogènes décrivant l'état du moteur, avant de construire la cartographie et sans pour autant supprimer des informations utiles pour la maintenance et le diagnostic.

Avantageusement, l'étape de standardisation comporte en outre une étape de sélection de variables pertinentes parmi lesdites variables de contexte selon un critère de minimisation. Ceci permet de limiter le temps de calcul en supprimant les variables de contexte les moins pertinentes sans pour autant limiter la précision de la standardisation.

Avantageusement, l'étape de standardisation comporte en outre une étape de nettoyage de bruit sur des variables endogènes normalisées en utilisant un outil de détection de changements brusques. Ceci permet de faciliter l' interprétation de la carte et de suivre de manière précise à la fois les évolutions lentes des trajectoires et leurs sauts brusques.

Avantageusement, la comparaison d'un morceau de ladite trajectoire courante avec d'autres morceaux de trajectoires est réalisée au moyen d'une distance d'édition mesurant la similarité entre les différents morceaux de trajectoires.

L'invention vise également un système de surveillance d'un moteur d'aéronef, comportant:

- des moyens de mesure pour recueillir au cours du temps des mesures sur des variables relatives à un moteur courant et son environnement comprenant à chaque acquisition un premier ensemble de mesures sur des variables endogènes décrivant le comportement du moteur et un second ensemble de mesures sur des variables exogènes décrivant le contexte d'acquisition;
- des moyens de traitement pour standardiser les mesures relatives aux variables endogènes en prenant en compte les mesures relatives aux variables exogènes pour former à chaque acquisition un point d'entrée représentant un état dudit moteur courant dans un espace multidimensionnel ;
- des moyens de traitement pour projeter selon une technique de compression déterminée chaque point d' entrée de l'espace multidimensionnel sur un point image d'une carte, construite préalablement, pour former une suite de points images sur ladite carte reflétant la distribution des points d' entrées dans l'espace multidimensionnel, lesdits points images formant une trajectoire courante représentative d'une évolution des états dudit moteur courant ;

- des moyens de traitement pour comparer un morceau de la fin de ladite trajectoire courante avec des morceaux de trajectoires de moteurs d'aéronefs enregistrées précédemment dans une base de données pour chercher des trajectoires similaires ; et
- des moyens de traitement pour analyser l'évolution statistique de ladite fin de trajectoire courante en fonction desdites trajectoires similaires pour anticiper des opérations de maintenance sur ledit moteur courant.

L' invention vise aussi un programme d'ordinateur comportant des instructions de code pour la mise en œuvre du procédé de standardisation selon les caractéristiques ci-dessus lorsqu'il est exécuté par des moyens de traitement.

**BRÈVE DESCRIPTION DES DESSINS**

D'autres particularités et avantages du dispositif et du procédé selon l'invention ressortiront mieux à la lecture de la description faite ci-après, à titre indicatif mais non limitatif, en référence aux dessins annexés sur lesquels :

- la Fig. 1 illustre de manière schématique des moyens matériels mis en œuvre dans le système ou procédé qui peuvent être employés pour la surveillance d' un moteur d' aéronef selon l'invention ;
- les Figs. 2A et 2B illustrent des signaux d'une variable endogène avant et après une normalisation;

- les Figs. 2C-2G illustrent des mesures lissées après suppression du bruit et détection des changements ;
- les Figs. 3A-3E illustrent une carte bidimensionnelle construite selon la technique de Kohonen reflétant la distribution des données de variables endogènes dans un espace multidimensionnel ;
- les Figs. 4A-4C illustrent chacune une représentation graphique d'une trajectoire courante d'un moteur sur un fond de carte représentant la température des gaz d'échappement ;
- la Fig. 5 illustre l'affichage d'un état instantané d'une pluralité de moteurs sur un fond de carte représentant la température des gaz d'échappement ; et
- la fig. 6 illustre un affichage d'une carte correspondant à une classification hiérarchique en zones homogènes de différents fonds de cartes représentatifs des variables endogènes.

## DESCRIPTION DÉTAILLÉE DE MODES DE RÉALISATION

Le principe de l'invention consiste à exploiter au mieux l'historique de la vie des moteurs suivis pour retrouver dans ces moteurs des comportements analogues qui conduisent à des opérations de maintenance. Ainsi, en observant l'évolution instantanée d'un moteur donné, il est possible de retrouver des trajectoires analogues suivies dans leur passé par d'autres moteurs et d'en déduire des statistiques pour les opérations de maintenance à venir.

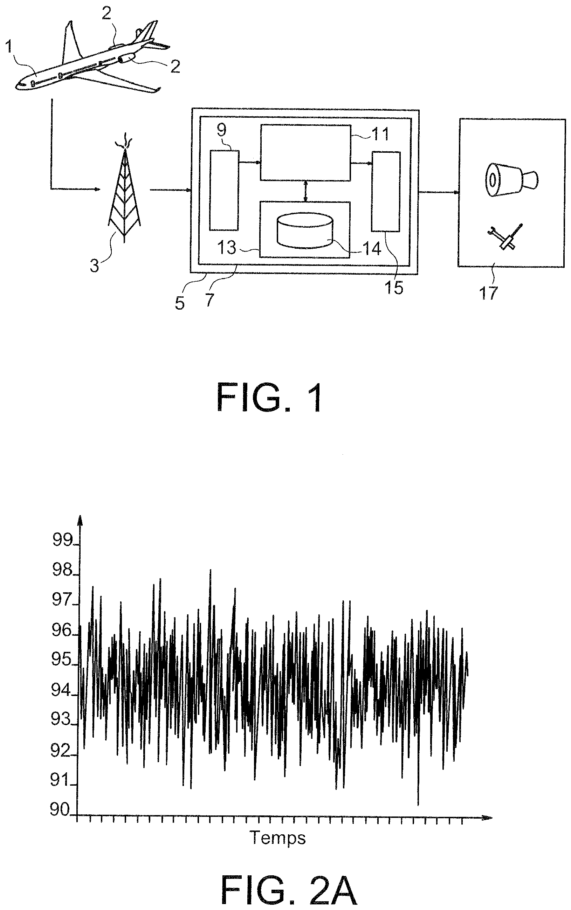

La figure 1 illustre un exemple de moyens matériels mis en œuvre dans le système ou procédé de surveillance d'un moteur d'aéronef selon l'invention.

Au cours d'un vol, un aéronef 1 procède à l'enregistrement d'informations sur son fonctionnement ainsi que sur différents paramètres environnementaux. Ces données enregistrées par des calculateurs embarqués (par exemple, FADEC, ACMS, DAR, QAR, etc.) sont issues des mesures fournies par des moyens de mesure ou capteurs intégrés dans l'aéronef 1. Par exemple, le FADEC (qui contrôle le moteur) enregistre un certain nombre de variables mesurées par des capteurs intégrés au moteur 2 permettant à la fois de contrôler le moteur 2 et de servir de base à une procédure de maintenance prédictive.

Ainsi, certains capteurs intégrés dans l'aéronef 1 recueillent au cours du temps des mesures sur des variables relatives au moteur 2 de l'aéronef et son environnement. A chaque acquisition, ces mesures comprennent un premier ensemble de mesures sur des variables endogènes décrivant le comportement du moteur 2 et un second ensemble de mesures sur des variables exogènes décrivant le contexte d'acquisition.

A titre d'exemple, les variables endogènes peuvent comprendre la vitesse de rotation de l'arbre N2, le débit du carburant FF, les températures et pressions de fluides en différentes localisations du moteur (par exemple, avant et/ou après compression), la température des gaz d'échappement EGT (Exhaust Gas Temperature), etc.

Les variables exogènes peuvent comprendre les variables suivantes : température extérieure, altitude, poids de l'avion, antigel sur les ailes, antigel nacelle, valve de purge, géométrie variable de vanne de décharge VBV (variable bypass valve), stator à indice variable VSV (variable stator vannes), consignes turbines haute pression HP (High pressure) et basse pression LP (Low pressure), ouverture compresseur HP, prélèvement d'air ECS (environnemental control system), rotation fan N1, angle de manette de commande de poussée TLA (Thrust Lever Angle), vitesse de l'avion (Mach number), etc.

Par ailleurs, un aéronef 1 envoie régulièrement au sol des petits messages instantanés « snapshots » issus des mesures concernant les variables endogènes et exogènes. Durant chaque vol, l'aéronef 1 envoie en général au moins deux messages au sol, l'un lors du décollage et l'autre pendant la phase de croisière. Ces messages sont envoyés par satellite (protocole ACARS) grâce à un système de transmission de données numériques entre l'aéronef en vol et le sol (d'autres protocoles de communication sont possibles : PCMCIA, 3G, etc.).

Les stations au sol 3 récupèrent les différents messages émis à différentes dates pour différents aéronefs 1 et pour différents moteurs 2 et les envoient ensuite par l'intermédiaire d'un lien de communication à un centre de gestion 5. Ce dernier comporte un système informatique 7 comprenant de manière habituelle des moyens d'entrée 9, des moyens de traitement 11, des moyens de stockage 13, et des moyens de sortie 15. On notera que d'autres données enregistrées durant le vol sur les calculateurs embarqués peuvent aussi être déchargées régulièrement pour enrichir les informations relatives aux moteurs 2.

Les différentes données issues des messages reçus directement des différents aéronefs 1 ou celles récupérées au sol depuis les mémoires internes des calculateurs embarqués sont stockées dans les moyens de stockage 13 pour constituer une base de données 14 sur toute une flotte de moteurs 2.

La base de données 14 comporte ainsi une pluralité de mesures recueillies au cours du temps sur les variables endogènes et exogènes concernant différents aéronefs 1 et différents moteurs 2. Ces mesures sont associées à des dates d'acquisition ou dates de vol ainsi qu'à des identifiants permettant d'identifier les moteurs et aéronefs concernés.

Le centre de gestion 5 utilise cette base de données 14 pour formaliser et comparer les trajectoires des moteurs 2 dans un espace métrique. Ceci permet d'analyser de manière non supervisée l'évolution des caractéristiques relatives au fonctionnement des moteurs 2 pour programmer des opérations de maintenance 17.

Au préalable, l'analyse comporte un prétraitement de données pour supprimer l'influence des conditions extérieures et des consignes sur les variables endogènes décrivant l'état des moteurs 2. En effet, le contexte d'acquisition de données peut être très variable. Par exemple, les mesures concernant le décollage acquises lors d'un premier vol de la journée où le moteur est démarré à froid peuvent être différentes de celles acquises lors des autres vols de la journée. D'autres exemples concernent la variation des conditions météo (pluie, neige, gel, etc.), le changement de pilotes, le lieu de survol (au-dessus de la mer, du désert, de la terre, etc.). Tous ces effets peuvent bien entendu, influencer les mesures.

Ainsi, les mesures recueillies au cours du temps sur des variables relatives à un moteur 2 courant et son environnement sont d'abords standardisées par les moyens de traitement 11. Plus particulièrement, les mesures relatives aux variables endogènes sont standardisées en prenant en compte les mesures relatives aux variables exogènes pour former à chaque acquisition un point d'entrée représentant un état du moteur courant. Le point d'entrée est représenté ainsi de manière indépendante du contexte d'acquisition, dans un espace multidimensionnel dont la dimension est égale au nombre de variables endogènes.

La standardisation repose en particulier sur une étape de normalisation des variables endogènes selon un modèle de régression. On notera qu'afin d'améliorer les résultats du modèle de régression, on peut prendre en considération des variables supplémentaires construites à partir de calculs utilisant des variables exogènes initiales pour former un ensemble de variables de contexte.

Ainsi, la normalisation peut être réalisée selon un modèle général de régression linéaire défini sur un espace de variables de contexte généré par des combinaisons analytiques (polynomiales et/ou non polynomiales) des variables exogènes.

Dans ce cas, supposons que les mesures sont collectées sur un ensemble de I moteurs et que pour chacun des moteurs ($1 \leq i \leq I$), il existe $n_i$ acquisitions de mesures. Chaque acquisition peut être exprimée par un couple constitué d'un vecteur endogène $Y_{ij}$ et d'un vecteur de contexte $X_{ij}$. Supposons que chaque vecteur endogène $Y_{ij}$ contient p variables endogènes

$$Y_{ij} = \left( Y_{ij}^1, \cdots, Y_{ij}^p \right)$$ et que chaque vecteur de contexte $X_{ij}$ contient q variables de contexte

$$X_{ij} = \left( X_{ij}^1, \cdots, X_{ij}^q \right)$$ avec $1 \leq i \leq I$ et $1 \leq j \leq n_i$. Chaque variable de contexte peut être construite selon une transformation polynomiale, un produit ou une combinaison analytique (par exemple inverse, racine, log, exp, etc.) de variables exogènes.

Dans le cadre d'un modèle de régression linéaire, les vecteurs endogènes sont supposés dépendre de manière linéaire des vecteurs de contexte. Ceci peut être formalisé par l'équation suivante, pour chacune des variables endogènes ($r \in \{1,...,p\}$) :

$$Y_{ij}^r = \mu^r + \alpha_i^r + \lambda_1^r X_{ij}^1 + \cdots + \lambda_q^r X_{ij}^q + \varepsilon_{ij}^r$$

$\mu^r$ est l'intercepté de la variable endogène $Y_{ij}^r$, $\alpha^r$ est un paramètre qui dépend du moteur permettant à la variable endogène $Y_{ij}^r$ de prendre en considération par exemple l'âge du moteur, $\varepsilon$ est le vecteur de résidu, et on peut ajouter une contrainte de non colinéarité $\sum_i n_i \alpha_i^r = 0$, où $n_i$ est le nombre d'acquisitions.

Cependant, le nombre de variables de contexte peut être assez important et il est donc avantageux que la standardisation puisse comporter une étape de sélection de variables pertinentes pour limiter le temps de calcul et éviter le sur-paramétrage. La sélection permet de ne conserver qu'un petit nombre de combinaisons qui sert à la suppression du contexte d'acquisition. Autrement dit, on sélectionne des données et ensuite on régresse sur le contexte pour obtenir des résidus qui sont indépendants du contexte d'acquisition.

Ainsi, pour sélectionner un sous ensemble de variables de contexte pertinentes, on peut se baser sur un critère de minimisation de type minimisation de somme des carrés des résidus avec une contrainte sur la somme des valeurs absolues des coefficients (selon par exemple le critère LASSO) de la manière suivante :

$$\sum_{i,j} \left( Y_{i,j}^r - \sum_{l=1}^q \lambda_l^r X_{i,j}^l \right)^2 \quad \text{avec} \quad \sum_{l=1}^q \left| \lambda_l^r \right| < C^r$$

Grâce à cette contrainte, les coefficients des variables les moins pertinentes ne sont pas utilisés et sont égaux à zéro.

Avantageusement, la standardisation peut comporter aussi une étape de nettoyage de bruit sur les variables endogènes normalisées en utilisant un outil de détection de changements brusques. L'utilisation de cet outil au sein des résidus des variables endogènes normalisées par rapport aux variables exogènes permet de repérer des événements particuliers ayant affecté la vie du moteur, que ces événements soient des opérations de maintenance ou des dégradations brutales de certains composants du moteur. En effet, le saut s'interprète physiquement comme une modification brusque de l'état du moteur qui peut correspondre à une dégradation brutale du moteur (par exemple un objet qui est rentré dans le moteur) ou une manipulation sur le moteur (par exemple le changement d'une pièce lors d'une opération de maintenance entre les deux vols).

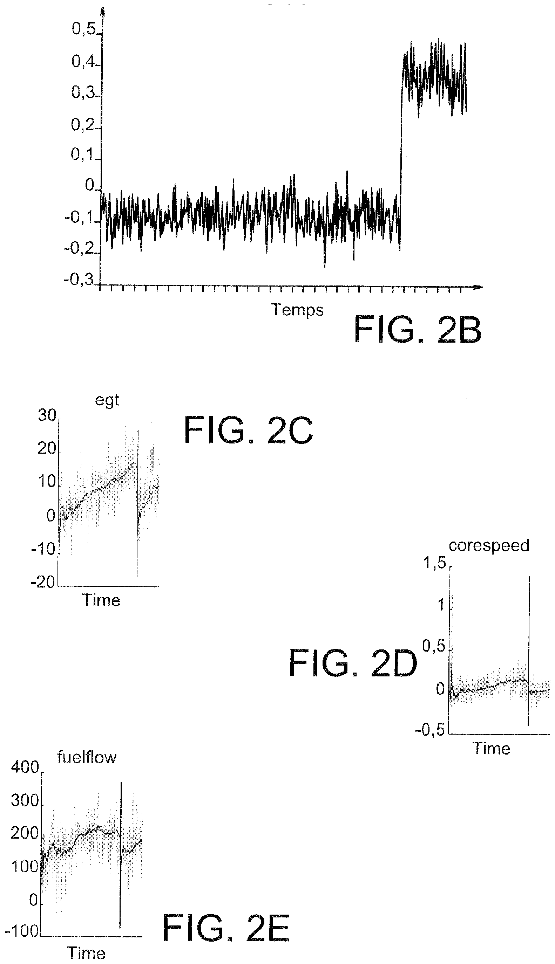

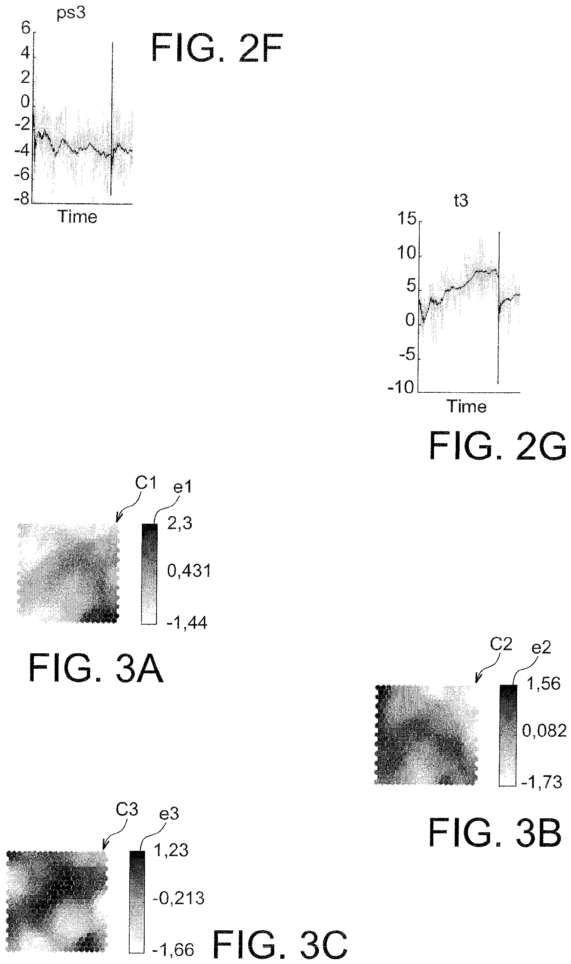

Les Figs 2A et 2B sont des exemples illustrant les signaux de la vitesse de rotation de l'arbre N2 avant et après la normalisation suivant le contexte et avant la détection de changement et le nettoyage du bruit.

Les Figs. 2C-2G illustrent des mesures lissées après suppression du bruit et après détection des changements. Les mesures des Figs. 2C-2G concernent la température des gaz d'échappement EGT, la vitesse de rotation de l'arbre N2, le débit du carburant FF, la pression et la température respectivement. Les dates de ruptures sont représentées par un trait vertical et les signaux estimés grâce à l'outil de détection sont représentés en trait plein.

Le saut par exemple sur la Fig. 2D était complètement dissimulé par le bruit et n'a été décelé que grâce à l'outil de détection de changements brusques qui a nettoyé le bruit résiduel autour du saut. Autrement dit, pour tenir compte des sauts brusques, l'outil de détection fait un lissage à gauche du saut différent du lissage à droite du saut.

A titre d' exemple, l'outil de détection de changements brusques peut s'appuyer sur l'utilisation conjointe et en parallèle d'un ensemble d'algorithmes de moindres carrés récursifs RLS (Recursive Least Squares) permettant d'estimer les variations lentes des signaux et d' un algorithme de rapport de vraisemblance généralisée GLR (Generalized Likelihood Ratio) multidimensionnel travaillant sur les résidus des algorithmes RLS pour repérer les ruptures.

Chaque algorithme RLS modélise le résidu d'une variable endogène grâce à un simple modèle linéaire faisant intervenir le temps et met à jour les paramètres récursivement. Chaque algorithme RLS fournit donc de nouveaux résidus dont les variations lentes ont été supprimées. C'est sur ces résidus nettoyés qu'un algorithme GRL multidimensionnel est utilisé pour détecter les sauts brusques.

Plus particulièrement, l'algorithme RLS utilise une fonction de coût des moindres carrées mais avec une pondération de type exponentiel qui dépend de l'ancienneté de l'observation, donnant ainsi plus de poids aux points récents qu'aux points plus anciens. Ce critère est ensuite minimisé récursivement selon l'équation suivante :

$$\underset{\alpha,\beta}{\arg\min} \sum_{j=l_m+1}^{l} \theta^{(l-j)} \left( Y_{i,j}^r - \beta_j + \alpha \right)^2$$

$\theta$ est un facteur d'oubli et $\beta_j$ les paramètres estimés.

En effet, après une initialisation au vol $l_m$, la tendance est estimée jusqu'au vol courant $l$. Le résidu est calculé et testé selon les paramètres choisis. Si le test détecte un changement au vol $l_{m+1}$ le calcul est réinitialisé. Ce test peut être implémenté comme un calcul multivariable, de sorte que lorsqu'un changement est détecté tous les calculs, sur chacune des variables, sont réinitialisés simultanément.

Ainsi, la standardisation permet de former pour chaque moteur 2 et pour chaque acquisition, un point d'entrée indépendant du contexte dans un espace multidimensionnel de dimension p (p étant le nombre de variables endogènes) représentant l'état du moteur à la date d'acquisition.

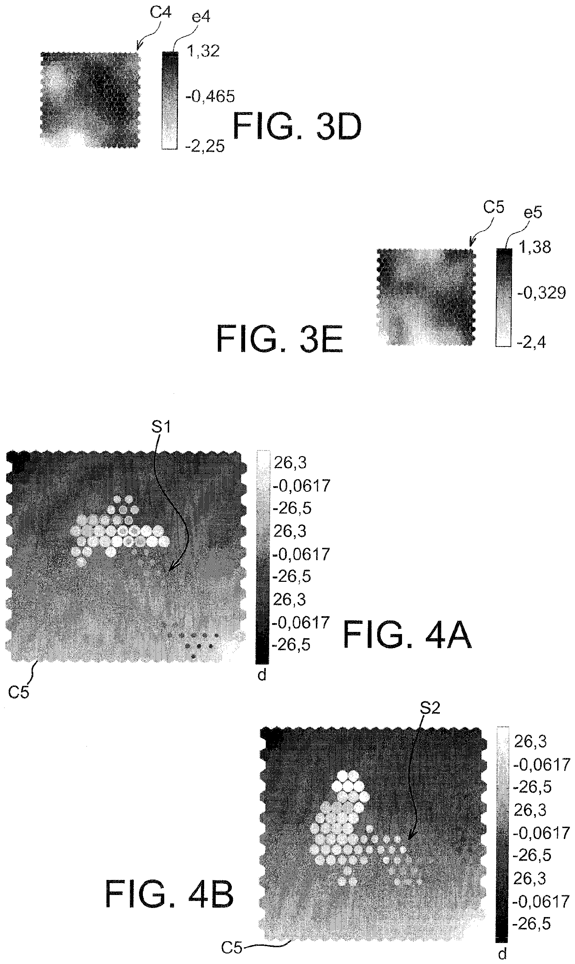

En outre, les moyens de traitement 11 sont configurés pour projeter, selon une technique de compression déterminée, chaque point d' entrée de l'espace multidimensionnel sur un point image d'une carte construite préalablement (voir par exemple Figs. 3A-3E).

En effet, la carte peut être construite lors d'une phase préalable d'apprentissage selon la même technique de compression à partir d'un jeu de données standardisées d'apprentissage. Cette carte peut être une carte auto-adaptative ou auto-organisatrice SOM (self-organising map) en 2D et les données standardisées d'apprentissage peuvent être issues des données anciennes relatives à une flotte de moteurs d'aéronef et/ou des données simulées provenant d'un modèle thermodynamique d'un moteur d'aéronef.

Avantageusement, on peut transformer ou adapter la carte au cours du temps en prenant en compte les nouveaux points d'entrées pour en faire d'autres cartes plus adaptées afin d'augmenter davantage la précision des pronostics.

La technique de compression pour construire une carte ou pour projeter la trajectoire d'un moteur 2 sur la carte peut être réalisée selon une technique de cartographie auto-adaptative de Kohonen. La cartographie ou projection de Kohonen est très adaptée pour analyser la répartition de données dans un espace multidimensionnel qui peut être un espace à grande dimension (par exemple, un espace 10D). La carte bidimensionnelle peut être considérée comme un filet extensible et la technique de projection de Kohonen consiste alors à déployer le filet dans l'espace multidimensionnel pour qu'il s'ajuste le plus possible sur une nappe comportant les données d'entrée de l'espace multidimensionnel. On notera que les données d' entrée ne remplissent pas l'espace multidimensionnel tout entier car ces données sont en général corrélées entre elles à cause des contraintes physiques. En effet, ces données d' entrée dépendent de manière quasi déterministe les unes des autres dans le cas d'un moteur sain.

Plus particulièrement, la technique de Kohonen est une technique de classification respectant la topologie de l'espace multidimensionnel des observations. Il regroupe les observations en un certain nombre de classes K (ou états), et construit un ensemble de vecteurs $\{m_1,...,m_k\}$ appelés vecteurs-codes (prototype vectors, en anglais) représentant chacun une classe. On peut choisir une structure de voisinage telle que les classes soient disposées sur une carte bidimensionnelle formée d'une grille plane (par exemple, de forme hexagonale) de K nœuds.

Chaque classe ou état (sous-ensemble de l'espace multidimensionnel) peut être décrite par une position sur la carte (c'est-à-dire, un indice i sur la grille) et un vecteur-code $m_i$ dans l'espace multidimensionnel.

Soit $\{x_1,...,x_N\}$ l'ensemble d'observations utilisé pour calibrer la carte. La construction de la carte correspond à définir une topologie entre les classes et la construction d'un ensemble de vecteurs-codes. Une fois la topologie entre les classes définie, l'algorithme de Kohonen permet de trouver ces vecteurs codes, de la manière itérative décrite ci-dessous.

Initialement, les vecteurs codes sont initialisés aléatoirement dans l'espace multidimensionnel. Ensuite, à chaque étape t, une observation $x_j$ est sélectionnée (par exemple tiré aléatoirement) et on réalise les deux phases de compétition et de coopération suivantes :

- phase de compétition : on détermine la classe c qui s'associe le mieux avec l'observation $x_j$ par l'équation :

$$c = \arg \min_{i \in \{1,...,K\}} \left\| x_j - m_i \right\|$$

- phase de coopération : on modifie les vecteurs codes de la classe c déterminée précédemment et de ses voisines sur la carte, selon une fonction de voisinage $h_{ci}$ définie sur la grille, par l'équation :

$$m_i(t+1) = m_i(t) + \alpha(t)h_{ci}(t)\left(x_j - m_i(t)\right)$$

où t est le temps ou le numéro de l'itération, $\alpha(t)$ le paramètre d'apprentissage de l'algorithme et $h_{ci}(t)$ la fonction de voisinage à l'étape t entre les classes c et i.

A titre d'exemple, on peut utiliser la fonction de voisinage suivante :

$$h_{ci}(t) = \exp\left(- d_{ci} / 2\sigma_t\right)$$

où $\sigma_t$ est un rayon décroissant dans le temps qui définit le voisinage sur la carte, et $d_{ci}$ est la distance sur la grille entre la classe c et la classe i.

Dans la pratique l'algorithme est stoppé lorsque les vecteurs codes ne bougent plus beaucoup ou lorsqu'un nombre maximal d'itérations a été effectué.

On notera qu'on peut utiliser d'autres techniques de réduction de dimension comme par exemple, l'analyse en composante principale des résidus de la régression des variables endogènes sur les variables exogènes qui permet de trouver les axes principaux maximisant les variances et minimisant l'erreur de construction.

Par ailleurs, la projection des points d'entrée d'un moteur courant par la technique de Kohonen (ou une toute autre technique de projection) permet de former une suite de points images sur la carte reflétant la distribution des points d'entrées dans l'espace multidimensionnel. Ces points images forment une trajectoire courante représentative d'une évolution des états du moteur courant sur une carte bien définie.

En outre, les moyens de traitement 11 sont configurés pour comparer un morceau de la fin de la trajectoire courante (c'est-à-dire, les derniers vols du moteur 2) avec des morceaux de trajectoires de moteurs d'aéronefs enregistrées précédemment dans la base de données 14 dans le but de chercher des trajectoires similaires.

Avantageusement, la comparaison d'un morceau de la trajectoire courante avec d'autres morceaux de trajectoires est réalisée au moyen d'une distance d'édition mesurant la similarité entre les différents morceaux de trajectoires.

Chaque morceau de trajectoire correspond à une chaîne de caractères (chaque nœud de la grille, vecteur-code, est un caractère) et ainsi, la distance d'édition est très adaptée pour mesurer la similarité entre deux chaînes de caractères qui est alors égale au nombre de caractères qu'il faut modifier (supprimer, insérer, ou remplacer) pour passer d'une chaîne à l'autre.

Supposons qu'on veuille comparer deux morceaux de trajectoires définies par les chaînes $s^1$ et $s^2$. Chaque chaîne est une succession de caractères

$$s^j = \left\{s_1^j, s_2^j, \ldots, s_{n_j}^j\right\}$$ où chaque caractère $s_i^j$ représente une position sur la carte. Supposons qu'il existe r opérations $o_1,...,o_r$ parmi des opérations de suppressions, insertions, et remplacement qui transforment la première chaîne $s^1$ en la deuxième chaîne $s^2$. Alors, le coût de la transformation globale est égal à la somme des coûts individuels cost($o_i$), et la distance entre les chaînes $s^1$ et $s^2$ est définie par la valeur minimale d'une telle opération :

$$d(s^1, s^2) = \min_{o:o(s^1)=s^2} \sum_{i=1}^{longeur(o)} cost(o_i) \ .$$

En outre, les moyens de traitement 11 sont configurés pour analyser l'évolution statistique de la fin de la trajectoire courante en fonction des trajectoires similaires afin d'anticiper les opérations de maintenance 17 sur le moteur 2 courant.

En effet, en utilisant les derniers vols du moteur 2 courant, les moyens de traitement 11 cherchent dans la base de données 14 des morceaux de trajectoires similaires à la fin de la trajectoire courante sur la carte. Une trajectoire ou morceau de trajectoire similaire à la fin de la trajectoire du moteur courant correspond à l'évolution des états d'un moteur qui a eu un passé similaire au moteur courant. Ainsi, en analysant le parcours de différentes trajectoires similaires, les moyens de traitement 11 peuvent extrapoler l'avenir de la trajectoire courante pour prévoir de manière statistique les événements futurs du moteur courant afin de mieux guider les opérations de maintenance sur ce moteur. Bien entendu, en utilisant une grande base de données 14 de moteurs, les moyens de traitement 11 peuvent pronostiquer avec une très grande précision l'évolution d'un moteur sous surveillance. A titre d'illustration, si on trouve par exemple cent trajectoires similaires à la trajectoire courante du moteur sous surveillance et que sur les cent trajectoires il y en a eu quatre-vingt sur lesquelles il a été nécessaire de changer une pièce du moteur, alors on peut déduire qu'il y a 80% de chance que le moteur courant nécessitera la même opération de maintenance. Bien entendu, il est possible aussi de prévoir le délai de disponibilité du moteur avant de changer la pièce et par conséquent, on peut repérer très vite les moteurs prioritaires pour réaliser la maintenance.

Par ailleurs, il est très avantageux d'afficher la représentation des points images sur au moins une carte bidimensionnelle. En effet, les cartes bidimensionnelles possèdent des propriétés de visualisation très utiles pour représenter des données multidimensionnelles en deux dimensions. Ainsi, les moyens de sortie 15 sont configurés pour afficher les représentations graphiques des évolutions temporelles de l'état d'un moteur 2 ou une pluralité de moteurs sur des écrans ou sur des feuilles d'impression.

Les Figs. 3A-6 illustrent quelques exemples de représentations graphiques sur des cartes auto-organisatrices bidimensionnelles.

Les Figs. 3A-3E illustrent une carte c1-c5 construite selon la technique de Kohonen dont les points reflètent la distribution des données de variables endogènes dans un espace de dimension cinq. A titre d'exemple, la topologie de la carte c1-c5 est configurée sous la forme d'un graphe de mailles hexagonales. Bien entendu, on peut aussi avoir des mailles de forme rectangulaire ou de toute autre forme. La couleur du fond de carte (par exemple, dégradé du blanc au noir) correspond aux valeurs des résidus de la variable endogène. Chaque cellule de la carte peut être coloriée suivant la valeur du vecteur code correspondant pour la variable endogène considérée. L'échelle de gris e1-e5 à côté de la carte c1-c5 indique l'intensité de la variable endogène correspondant.

Ainsi, les Figs. 3A-3E représentent cinq fois la même carte pour les cinq variables endogènes suivantes : la vitesse de rotation de l'arbre de haute pression, le débit du carburant, la pression en aval de la compression, la température en aval de la compression, et la température des gaz d'échappement.

Plus particulièrement, la Fig. 3A représente le fond de carte c1 pour la vitesse de rotation de l'arbre. Chaque point sur cette carte correspond à une valeur de vitesse selon un dégradé du blanc au noir. Un point noir représente une vitesse rapide, un point blanc représente une vitesse lente, et un point gris représente une vitesse intermédiaire. On voit par exemple une zone noire (vitesses rapides) en bas à droite, une zone blanche (vitesses lentes) en haut, et une zone grise (vitesses moyennes) au milieu de la carte c1.

La Fig. 3B représente le fond de carte c2 pour le débit du carburant. Le côté gauche (zone noire) représente une consommation élevée de carburant alors que la zone blanche en haut à droite représente une consommation faible, etc.

De même, les Figs 3D-3E représentent les fonds de carte c3-c5 pour la pression en aval de la compression, la température en aval de la compression, et la température des gaz d'échappement, respectivement.

Ainsi, chaque cellule de la carte correspond à un état du moteur selon les cinq variables endogènes représentées sur les cinq fonds de cartes c1-c5. Par exemple, le coin en haut à gauche correspond à des états de vitesse moyennement faible, haute température de sortie, haute consommation de carburant, et hautes pression et température après compression. Ceci permet de représenter sur la carte c1-c5 les zones correspondant à différents types de dégradations.

On peut ensuite représenter la trajectoire courante d'un moteur 2 sur une pluralité de fonds de cartes représentant chacun une des variables endogènes afin de visualiser l'évolution au cours du temps de l'état du moteur courant par rapport à des zones de dégradations et selon chaque variable endogène.

Plus particulièrement, les Figs. 4A-4C illustrent l'affichage des trajectoires courantes ou suites d'états S1-S3 sur un fond de carte c5 représentant la température des gaz d'échappement EGT. Selon cet exemple, l'échelle de température e5 sur la droite montre que le blanc représente une température élevée et le noir une température basse. La température des gaz d'échappement EGT est un indicateur bien connu des motoristes pour évaluer par exemple l'usure du moteur 2. Une température élevée indique qu'une grande partie de l'énergie commence à se transformer en chaleur diminuant ainsi le rendement du moteur.

Sur ces figures, la trajectoire S1-S3 du moteur est représentée par une succession de points (qui peuvent être représentés en plusieurs couleurs) avec un diamètre décroissant dans le temps permettant ainsi de représenter une superposition de points. La taille des points correspond ainsi à la date de la mesure, plus un point est petit, plus il est récent.

La Fig. 4A montre la trajectoire S1 d'un moteur dont l'état est resté un long moment au milieu de la carte c5 et puis, la trajectoire S1 a commencé à se déplacer vers le bas pour se rapprocher du coin inférieur droit de la carte c5 qui indique une augmentation de la température des gaz d'échappement EGT montrant un phénomène naturel d'usure.

La Fig. 4B illustre un autre exemple d'un moteur 2 qui se comportait normalement dans une zone centrale de la carte c5 et qui commençait à se dégrader (la trajectoire S2 se déplaçant un peu vers une zone plus chaude) et puis, tout d'un coup la trajectoire S2 remonte vers le haut pour se rapprocher du coin supérieur droit de la carte c5 qui indique une diminution de la température des gaz d'échappement EGT. Ce changement de comportement indique qu'une manipulation a été réalisée sur le moteur. Cette manipulation peut être par exemple, le nettoyage du moteur ou un changement de mission du moteur vers une zone géographique plus froide.

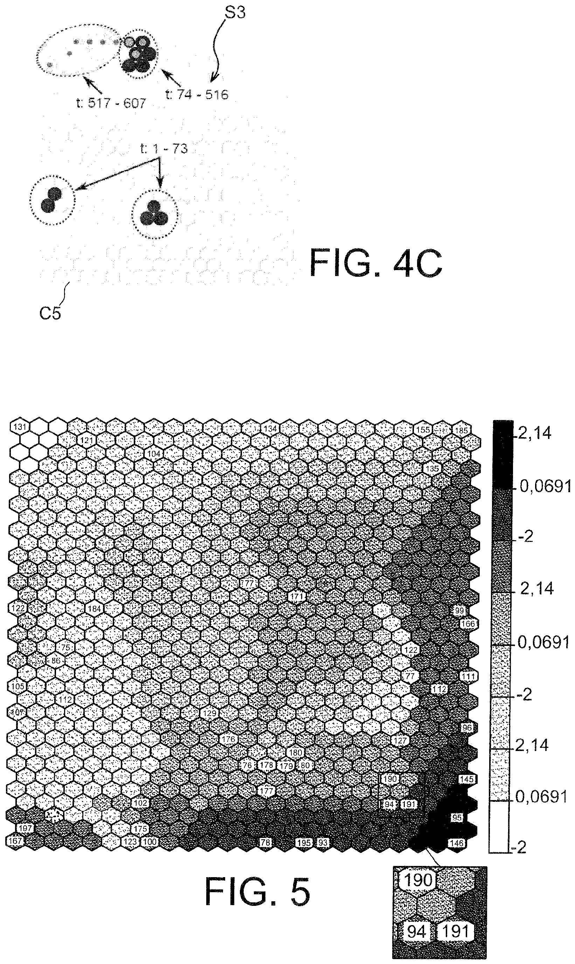

La Fig. 4C illustre encore un autre exemple de trajectoire S3 d'un moteur 2 avec des sauts. Les numéros 1 à 607 représentent une succession de vols. Dans les premiers vols du moteur (vols 1 à 73), il y a eu un premier petit saut. Un deuxième saut a eu lieu entre les vols numéros 73 et 74 avant que la trajectoire S3 se cantonne durant les vols 74 à 516 dans une zone au milieu en haut de la carte. Finalement, après un troisième saut, la position du moteur se rapproche à la fin de la trajectoire (vols 517 à 607) du coin supérieur gauche. Il est clair que ce moteur souffrait d'un problème de détérioration d'au moins un de ses composants et a dû subir des opérations de maintenance.

Par ailleurs, on peut aussi afficher la fin de la trajectoire courante d'un moteur et des premières trajectoires similaires classées par ordre de similarité sur une pluralité de fonds de cartes. Ceci permet de pronostiquer l'évolution du moteur courant avec une très grande précision en exploitant au mieux l'historique des moteurs semblables ayant des comportements analogues.

On peut aussi afficher l'état courant d'une flotte de moteurs sur une pluralité de fonds de cartes bidimensionnels représentant chacun une des variables endogènes. Ceci permet de représenter simultanément toute une flotte de moteurs d'aéronef et de réaliser une comparaison rapide entre les différents moteurs.

A titre d'exemple, la Fig. 5 illustre l'affichage d'un état instantané d'une pluralité de moteurs sur un fond de carte c5 représentant la température EGT. Chaque numéro représente un moteur et on peut voir par exemple, que les moteurs 94, 190 et 191 se trouvent dans une zone de température EGT élevée et par conséquent, ces moteurs sont prioritaires pour des opérations de maintenance.

On notera qu'on peut aussi remplacer les fonds de cartes dans les exemples des figures précédentes par une classification hiérarchique ou chaque point représente un état de l'espace multidimensionnel. Deux points voisins sur la carte peuvent être plus ou moins proches selon que la distance multidimensionnelle entre ces points est grande ou petite. Ainsi, on peut construire sur la carte des frontières entre des points voisins présentant des distances multidimensionnelles éloignées. Ceci permet de définir un certain nombre de zones homogènes correspondant à des phénomènes particuliers qui pourront être facilement identifiés par les experts du moteur.

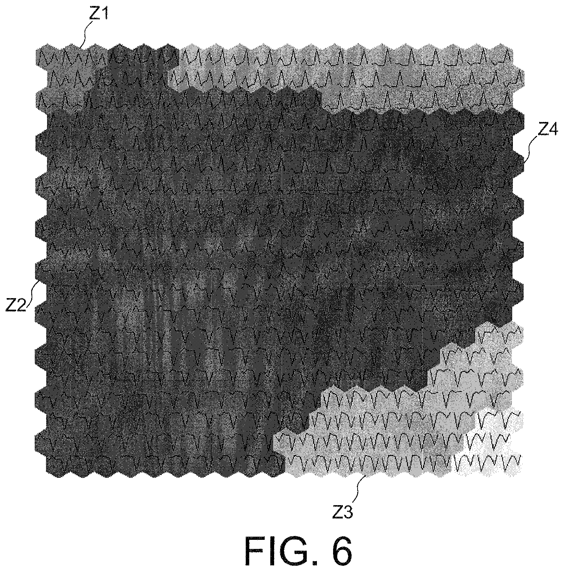

La fig. 6 illustre un exemple d'un affichage d'une carte c6 correspondant à une classification hiérarchique en zones homogènes de différents fonds de cartes représentatifs des variables endogènes. Par exemple la zone Z1 correspond à une zone de température EGT faible et vitesse faible. La zone Z2 correspond à une zone de température d'huile élevée. La zone Z3 correspond à une zone de vitesse de rotation élevée. La zone Z4 correspond à une zone de fonctionnement normal. Ensuite, en positionnant la trajectoire (non représentée) d'un moteur sur cette carte, on peut facilement identifier si le moteur a un comportement normal (zone Z4) et vers quelle zone il a tendance à se diriger.

La carte peut aussi être subdivisée d'une autre manière en plusieurs zones comportant une zone de vieux moteurs, une zone de moteurs qui risquent d'avoir un problème de turbine, etc. De même, en projetant la trajectoire d'un moteur sur la carte, on peut voir sur quelle zone le moteur se dirige. Ceci permet à un opérateur de maintenance de visualiser sur un écran l'évolution de l'état du moteur pour mieux programmer les opérations de maintenance.

L'invention vise aussi un programme d'ordinateur, susceptible d'être mis en œuvre dans les moyens de traitement et comportant des instructions de code adaptées à la mise en œuvre d'un procédé selon l'invention telle que décrite ci-dessus.

## Revendications

1. Procédé de surveillance pouvant être utilisé pour surveiller un moteur (2) d'un aéronef, **caractérisé en ce qu'**il comporte les étapes suivantes :

   - recevoir des données issues des mesures recueillies au cours du temps par des capteurs intégrés dans un aéronef, lesdites mesures étant sur des variables relatives à un moteur (2) courant et son environnement comprenant à chaque acquisition un premier ensemble de mesures sur des variables endogènes décrivant le comportement du moteur et un second ensemble de mesures sur des variables exogènes décrivant le contexte d'acquisition ;
   - standardiser les mesures relatives aux variables endogènes en prenant en compte les mesures relatives aux variables exogènes pour former à chaque acquisition un point d'entrée représentant un état dudit moteur courant dans un espace multidimensionnel ;
   - projeter selon une technique de compression déterminée chaque point d'entrée de l'espace multidimensionnel sur un point image d'une carte (c1-c5), construite préalablement, pour former une suite de points images sur ladite carte reflétant la distribution des points d'entrées dans l'espace multidimensionnel, lesdits points images formant une trajectoire (S1-S3) courante représentative d'une évolution des états dudit moteur courant ;
   - comparer un morceau de la fin de ladite trajectoire courante avec des morceaux de trajectoires de moteurs d'aéronefs enregistrées précédemment dans une base de données (14) pour chercher des trajectoires similaires ; et

- analyser l'évolution statistique de ladite fin de trajectoire courante en fonction desdites trajectoires similaires pour anticiper des opérations de maintenance (17) sur ledit moteur courant.

**2.** Procédé selon la revendication 1, **caractérisé en ce que** ladite carte (c1-c5) est construite lors d'une phase préalable d'apprentissage selon ladite technique de compression déterminée à partir d'un jeu de données standardisées d'apprentissage.

**3.** Procédé selon la revendication 1 ou 2, **caractérisé en ce que** ladite technique de compression déterminée est une technique de cartographie auto-adaptative de Kohonen.

**4.** Procédé selon l'une quelconque des revendications 1 à 3, comportant en outre un affichage des points images sur au moins une carte (c1-c5) bidimensionnelle.

**5.** Procédé selon la revendication 4, comportant un affichage de ladite trajectoire (S1-S3) courante sur une pluralité de fonds de cartes (c1-c5) bidimensionnelles représentant chacun une desdites variables endogènes.

**6.** Procédé selon la revendication 4, comportant un affichage de ladite fin de trajectoire courante et des premières trajectoires similaires classées par ordre de similarité sur une pluralité de fonds de cartes (c1-c5) bidimensionnelles.

**7.** Procédé selon la revendication 4, comportant un affichage de fond de carte (c6) correspondant à une classification hiérarchique en zones homogènes de différents fonds de cartes représentatifs des variables endogènes.

**8.** Procédé selon la revendication 4, comportant un affichage d'un état courant d'une pluralité de moteurs sur une pluralité de fonds de cartes représentant chacun une desdites variables endogènes.

**9.** Procédé selon l'une quelconque des revendications précédentes, **caractérisé en ce qu'**il comporte une étape d'adaptation pour transformer ladite carte au cours du temps en prenant en compte lesdits points d'entrée.

**10.** Procédé selon l'une quelconque des revendications précédentes, **caractérisé en ce que** l'étape de standardisation comporte une étape de normalisation des variables endogènes selon un modèle de régression sur un espace de variables de contexte généré par des combinaisons analytiques des variables exogènes.

**11.** Procédé selon la revendication 10, **caractérisé en ce que** l'étape de standardisation comporte en outre une étape de sélection de variables pertinentes parmi lesdites variables de contexte selon un critère de minimisation.

**12.** Procédé selon la revendication 10 ou 11, **caractérisé en ce que** l'étape de standardisation comporte en outre une étape de nettoyage de bruit sur des variables endogènes normalisées en utilisant un outil de détection de changements brusques.

**13.** Procédé selon l'une quelconque des revendications précédentes, **caractérisé en ce que** la comparaison d'un morceau de ladite trajectoire courante avec d'autres morceaux de trajectoires est réalisée au moyen d'une distance d'édition mesurant la similarité entre les différentes morceaux de trajectoires.

**14.** Système de surveillance pouvant être utilisé pour surveiller un moteur (2) d'un aéronef, **caractérisé en ce qu'**il comporte :

- des moyens configurés pour recevoir des données issues des mesures recueillies au cours du temps par des capteurs intégrés dans un aéronef, lesdites mesures étant sur des variables relatives à un moteur (2) courant et son environnement comprenant à chaque acquisition un premier ensemble de mesures sur des variables endogènes décrivant le comportement du moteur et un second ensemble de mesures sur des variables exogènes décrivant le contexte d'acquisition ;
- des moyens de traitement (11) configurés pour standardiser les mesures relatives aux variables endogènes en prenant en compte les mesures relatives aux variables exogènes pour former à chaque acquisition un point d'entrée représentant un état dudit moteur courant dans un espace multidimensionnel ;
- des moyens de traitement (11) configurés pour projeter selon une technique de compression déterminée chaque point d'entrée de l'espace multidimensionnel sur un point image d'une carte, construite préalablement, pour former une suite de points images sur ladite carte reflétant la distribution des points d'entrées dans l'espace multidimensionnel, lesdits points images formant une trajectoire courante représentative d'une évolution des états dudit moteur courant ;
- des moyens de traitement (11) configurés pour comparer un morceau de la fin de ladite trajectoire courante avec des morceaux de trajectoires de moteurs d'aéronefs enregistrées précédemment dans une base de données pour chercher des trajectoires similaires ; et
- des moyens de traitement (11) configurés pour analyser l'évolution statistique de ladite fin de trajectoire courante en fonction desdites trajectoires similaires pour anticiper des opérations de maintenance (17) sur ledit moteur courant.

**15.** Programme d'ordinateur comportant des instructions de code pour la mise en œuvre du procédé de standardisation selon les revendications 1 à 13 lorsqu'il est exécuté par des moyens de traitement (11) du système de surveillance de la revendication 14.


**Patentansprüche**

**1.** Überwachungsverfahren, das zur Überwachung eines Luftfahrzeug-Motors (2) verwendet werden kann,
**dadurch gekennzeichnet,**
**dass** es die folgenden Verfahrensschritte umfasst:

- Empfangen von Daten, die aus Messungen hervorgehen, die im Laufe der Zeit durch in einem Luftfahrzeug eingebaute Sensoren gesammelt wurden, wobei diese Messungen, die Größen eines aktuellen Motors (2) und dessen Umgebung betreffen und bei jeder Erfassung eine erste Gruppe von Messungen, endogene Größen betreffend, die das Verhalten des Motors beschreiben, und eine zweite Gruppe von Messungen, exogene Größen betreffend, die das Erfassungsumfeld betreffen, umfassen;
- Standardisieren der Messungen bezüglich der endogenen Größen unter Berücksichtigung der Messungen bezüglich der exogenen Größen, um bei jeder Erfassung einen Eingangspunkt zu bilden, der einen Zustand des genannten aktuellen Motors in einem multidimensionalen Raum darstellt;
- Projizieren - nach einer festgelegten Komprimierungstechnik - jedes Eingangspunkts des multidimensionalen Raums auf einen Bildpunkt einer zuvor erstellten Karte (c1 - c5), um eine Folge von Bildpunkten auf dieser Karte zu bilden, die die Verteilung der Eingangspunkte in dem multidimensionalen Raum widerspiegelt, wobei die genannten Bildpunkte eine aktuelle Bahn (S1 - S3) bilden, die eine Entwicklung der Zustände des genannten aktuellen Motors darstellt;
- Vergleichen eines Stücks des Endes dieser aktuellen Bahn mit Stücken von Bahnen von Luftfahrzeug-Motoren, die vorher in einer Datenbank (14) aufgezeichnet wurden, um ähnliche Bahnen zu suchen; und
- Analysieren der statistischen Entwicklung des genannten Endes dieser aktuellen Bahn in Abhängigkeit von den genannten ähnlichen Bahnen, um Wartungsarbeiten (17) an diesem aktuellen Motor vorauszusehen.

**2.** Verfahren nach Anspruch 1,

**dadurch gekennzeichnet,**
**dass** die genannte Karte (c1 - c5) während einer vorausgehenden Lernphase nach der genannten Komprimierungstechnik erstellt wird, die auf Basis eines Datensatzes mit standardisierten Lerndaten festgelegt wird.

**3.** Verfahren nach Anspruch 1 oder 2,

**dadurch gekennzeichnet,**
**dass** die genannte festgelegte Komprimierungstechnik eine autoadaptive Kennfeld-Technik nach Kohonen ist.

**4.** Verfahren nach einem der Ansprüche 1 bis 3, das ferner eine Darstellung der Bildpunkte auf mindestens einer zweidimensionalen Karte (c1 - c5) beinhaltet.

**5.** Verfahren nach Anspruch 4, das eine Darstellung der genannten aktuellen Bahn (S1 - S3) auf einer Mehrzahl von Hintergründen zweidimensionaler Karten (c1 - c5) umfasst, die jeweils eine der genannten endogenen Größen darstellen.

**6.** Verfahren nach Anspruch 4, das eine Darstellung des genannten Endes der aktuellen Bahn und der ersten ähnlichen Bahnen, geordnet in der Reihenfolge der Ähnlichkeit auf einer Mehrzahl von Hintergründen zweidimensionaler Karten (c1 - c5), umfasst.

**7.** Verfahren nach Anspruch 4, das eine Darstellung des Kartenhintergrundes (c6) umfasst, die einer hierarchischen Klassifizierung in homogene Bereiche verschiedener Kartenhintergründe entspricht, die endogene Größen darstellen.

**8.** Verfahren nach Anspruch 4, das eine Darstellung eines aktuellen Zustands einer Vielzahl von Motoren auf einer Vielzahl von Kartenhintergründen umfasst, die jeweils eine der genannten endogenen Größen darstellen.

**9.** Verfahren nach einem der vorherigen Ansprüche,

**dadurch gekennzeichnet,**
**dass** es einen Verfahrensschritt der Adaptierung umfasst, um die genannte Karte im Laufe der Zeit unter Berücksichtigung der genannten Eingangspunkte umzuwandeln.

10. Verfahren nach einem der vorherigen Ansprüche,

    **dadurch gekennzeichnet,**
    **dass** der Verfahrensschritt der Standardisierung einen Schritt der Normalisierung der endogenen Größen nach einem Regressionsmodell auf einen Raum von Umfeldgrößen, der durch analytische Kombinationen der exogenen Größen erzeugt wird, beinhaltet.

11. Verfahren nach Anspruch 10,

    **dadurch gekennzeichnet,**
    **dass** der Verfahrensschritt der Standardisierung ferner einen Schritt der Selektion relevanter Größen aus den genannten Umfeldgrößen nach einem Minimierungskriterium beinhaltet.

12. Verfahren nach Anspruch 10 oder 11,

    **dadurch gekennzeichnet,**
    **dass** der Verfahrensschritt der Standardisierung ferner einen Schritt des Entfernens des Rauschens an normalisierten endogenen Größen durch Verwendung eines Werkzeugs zur Erkennung plötzlicher Veränderungen beinhaltet.

13. Verfahren nach einem der vorherigen Ansprüche,

    **dadurch gekennzeichnet,**
    **dass** der Vergleich eines Stücks der genannten aktuellen Bahn mit anderen Stücken von Bahnen mittels einer Edit-Distanz durchgeführt wird, wobei die Ähnlichkeit zwischen den verschiedenen Stücken von Bahnen gemessen wird.

14. Überwachungssystem, das eingesetzt werden kann, um einen Motor (2) eines Luftfahrzeugs zu überwachen,

    **dadurch gekennzeichnet,**
    **dass** es aufweist:

    - Mittel, die konfiguriert sind, um Daten zu empfangen, die aus Messungen hervorgehen, die im Laufe der Zeit durch in einem Luftfahrzeug eingebaute Sensoren gesammelt wurden, wobei diese Messungen, die Größen bezüglich eines aktuellen Motors (2) und dessen Umgebung betreffen und bei jeder Erfassung eine erste Gruppe von Messungen, endogene Größen betreffend, die das Verhalten des Motors beschreiben, und eine zweite Gruppe von Messungen, exogene Größen betreffend, die das Erfassungsumfeld betreffen, umfassen;
    - Bearbeitungsmittel (11), die konfiguriert sind, um die Messungen bezüglich der endogenen Größen unter Berücksichtigung der Messungen bezüglich der exogenen Größen zu standardisieren, um bei jeder Erfassung einen Eingangspunkt zu bilden, der einen Zustand des genannten aktuellen Motors in einem multidimensionalen Raum darstellt;
    - Bearbeitungsmittel (11), die konfiguriert sind, um nach einer festgelegten Komprimierungstechnik jeden Eingangspunkt des multidimensionalen Raums auf einen Bildpunkt einer zuvor erstellten Karte zu projizieren, um eine Folge von Bildpunkten auf dieser Karte zu bilden, die die Verteilung der Eingangspunkte in dem multidimensionalen Raum widerspiegelt, wobei die genannten Bildpunkte eine aktuelle Bahn bilden, die eine Entwicklung der Zustände des genannten aktuellen Motors darstellt;
    - Bearbeitungsmittel (11), die konfiguriert sind, um ein Stück des Endes der genannten aktuellen Bahn mit Stücken von Bahnen von Luftfahrzeug-Motoren zu vergleichen, die vorher in einer Datenbank aufgezeichnet wurden, um ähnliche Bahnen zu suchen; und
    - Bearbeitungsmittel (11), die konfiguriert sind, um die statistische Entwicklung des genannten Endes der aktuellen Bahn in Abhängigkeit von den genannten ähnlichen Bahnen zu analysieren, um Wartungsarbeiten (17) an dem genannten aktuellen Motor vorauszusehen.

15. Computerprogramm, welches Quellcode-Anweisungen zur Durchführung des Standardisierungsverfahrens nach den Ansprüchen 1 bis 13 enthält, wenn es durch Bearbeitungsmittel (11) des Überwachungssystems von Anspruch 14 ausgeführt wird.

## Claims

1. Method of monitoring that can be used to monitor an aircraft engine (2), **characterised in that** it comprises the following steps:

    - receive data from measurements collected over time by sensors integrated into an aircraft, said measurements being on variables related to a current engine (2) and its environment, comprising a first set of measurements on endogenic variables describing the behaviour of the engine and a second set of measurements on exogenic variables describing the acquisition context, during each acquisition;
    - standardise measurements related to endogenic variables taking account of measurements related to exogenic variables to form an entry point corresponding to a condition of said current engine in a multi-dimensional space, for each acquisition;

- use a determined compression technique to project each entry point in the multi-dimensional space onto an image point on a previously constructed map (c1-c5), to form a sequence of image points on said map reflecting the distribution of entry points in the multi-dimensional space, said image points forming a current trajectory (S1-S3) representative of a change to the conditions of said current engine;

- compare a portion of the end of said current trajectory with previously recorded portions of trajectories of aircraft engines kept in a database (14) to search for similar trajectories; and

- analyse the statistical variation of said end of current trajectory as a function of said similar trajectories to anticipate maintenance operations (17) on said current engine.

2. Method according to claim 1, **characterised in that** said map (c1-c5) is constructed during a preliminary learning phase according to said determined compression technique determined from a set of standardised learning data.

3. Method according to claim 1 or 2, **characterised in that** said determined compression technique is a Kohonen self-organising map technique.

4. Method according to any one of claims 1 to 3, also comprising a display of image points on at least one two-dimensional map (c1-c5).

5. Method according to claim 4, comprising a display of said current trajectory (S1-S3) on a plurality of two-dimensional map backgrounds (c1-c5) each representing one of said endogenic variables.

6. Method according to claim 4, comprising a display of said end of current trajectory and first similar trajectories classified by order of similarity on a plurality of two-dimensional map backgrounds (c1-c5).

7. Method according to claim 4, comprising a map (c6) background display corresponding to a hierarchical classification of different map backgrounds representative of endogenic variables, into homogeneous zones.

8. Method according to claim 4, comprising a display of a current condition of a plurality of engines on a plurality of map backgrounds each representing one of said endogenic variables.

9. Method according to any one of the previous claims, **characterised in that** it comprises an adaptation step to transform said map over time taking account of said entry points.

10. Method according to any one of the previous claims, **characterised in that** the standardisation step comprises a step to normalise endogenic variables using a regression model on a space of context variables, generated by analytic combinations of exogenic variables.

11. Method according to claim 10, **characterised in that** the standardisation step also comprises a step to select the relevant variables among said context variables according to a minimisation criterion.

12. Method according to claim 10 or 11, **characterised in that** the standardisation step also comprises a step to clean noise on normalised endogenic variables using a tool to detect sudden changes.

13. Method according to any one of the previous claims, **characterised in that** the comparison between a portion of said current trajectory and other portions of trajectories is made using an edition distance measuring the similarity between the different portions of trajectories.

- receive data from measurements collected over time by sensors integrated into an aircraft, said measurements being on variables related to a current engine (2) and its environment, comprising a first set of measurements on endogenic variables describing the behaviour of the engine and a second set of measurements on exogenic variables describing the acquisition context, during each acquisition;

14. Monitoring system that can be used to monitor an aircraft engine (2), **characterised in that** it comprises:

- means configured to receive data from measurements collected over time by sensors integrated into an aircraft, said measurements being on variables related to a current engine (2) and its environment comprising a first set of measurements on endogenic variables describing the behaviour of the engine and a second set of measurements on exogenic variables describing the acquisition context, during each acquisition;

- processing means (11) to standardise measurements related to endogenic variables taking account of measurements related to exogenic variables to form an entry point representing a condition of said current engine in a multi-dimensional space;
- processing means (11) to project each entry point in the multi-dimensional space onto an image point of a previously constructed map using a determined compression technique, to form a sequence of image points on said map reflecting the distribution of entry points in the multi-dimensional space, said image points forming a current trajectory representative of a change to the condition of said current engine;
- processing means (11) to compare a portion of the end of said current trajectory with previously recorded portions of trajectories of other aircraft engines, kept in a database to search for similar trajectories; and
- processing means (11) to analyse the statistical variation of said end of current trajectory as a function of said similar trajectories to anticipate maintenance operations (17) on said current engine.

15. Computer program containing code instructions for use of the standardisation method according to claims 1 to 13 when it is run by processing means of the monitoring system of claim 14.

# FIG. 1

Temps

# FIG. 2A

FIG. 2B

FIG. 2C

FIG. 2D

FIG. 2E

FIG. 2F

FIG. 2G

FIG. 3A

FIG. 3B

FIG. 3C

FIG. 3D

FIG. 3E

FIG. 4A

FIG. 4B

FIG. 4C

FIG. 5

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20080091630 A